# EUROPÄISCHE PATENTSCHRIFT

(11) **EP 3 305 572 B1**
(45) Veröffentlichungstag und Bekanntmachung des Hinweises auf die Patenterteilung: **26.01.2022**
(21) Anmeldenummer: 17193732.9
(22) Anmeldetag: 28.09.2017
(51) Int. Cl.: B60K 6/365, B60K 6/445, B60K 6/547, B60K 25/02, B60W 10/30, B60W 20/00

(54) **ANTRIEBSEINRICHTUNG FÜR EIN KRAFTFAHRZEUG**
DRIVE DEVICE FOR A MOTOR VEHICLE
DISPOSITIF D'ENTRAÎNEMENT POUR UN VÉHICULE AUTOMOBILE

(30) Priorität: 10.10.2016 DE 102016219617
(43) Veröffentlichungstag der Anmeldung: 11.04.2018
(73) Patentinhaber: AUDI AG, 85045 Ingolstadt (DE)
(72) Erfinder: Hoffmann, Thomas, 93339 Riedenburg (DE); Störmer, Markus, 92334 Berching (DE)

(56) Entgegenhaltungen:
- DE-A1-102006 037 577
- DE-A1-102014 009 866
- DE-B4- 19 581 495
- DE-T5-112011 105 719
- US-A1- 2008 096 711

## Beschreibung

Die Erfindung betrifft eine Antriebseinrichtung für ein Kraftfahrzeug, mit einem ersten Antriebsaggregat, einem zweiten Antriebsaggregat sowie einem mit dem zweiten Antriebsaggregat gekoppelten Umlaufrädergetriebe, wobei das zweite Antriebsaggregat über das Umlaufrädergetriebe mit einer Abtriebswelle der Antriebseinrichtung und mittels einer Schaltkupplung mit dem ersten Antriebsaggregat koppelbar ist, wobei eine Nebentriebwelle eines wenigstens ein Nebenaggregat aufweisenden Nebentriebs der Antriebseinrichtung mit dem Umlaufrädergetriebe gekoppelt ist. Die Erfindung betrifft weiterhin ein Verfahren zum Betreiben einer Antriebseinrichtung für ein Kraftfahrzeug.

Die Antriebseinrichtung dient dem Antreiben des Kraftfahrzeugs, insoweit also dem Bereitstellen eines auf das Antreiben des Kraftfahrzeugs gerichteten Drehmoments. Die Antriebseinrichtung stellt das Drehmoment, welches auch als Antriebsdrehmoment bezeichnet werden kann, an der Abtriebswelle der Antriebseinrichtung bereit. Beispielsweise ist die Abtriebswelle starr und/oder permanent mit einer Radachse des Kraftfahrzeugs oder wenigstens einem Rad des Kraftfahrzeugs, welches der Radachse zugeordnet sein kann, wirkverbunden. Die Wirkverbindung zwischen der Abtriebswelle und der Radachse beziehungsweise dem Rad kann über ein Getriebe, beispielsweise ein Differentialgetriebe, insbesondere ein Mittendifferentialgetriebe und/oder ein Achsdifferentialgetriebe, hergestellt sein.

Die Antriebseinrichtung verfügt über mehrere Antriebsaggregate, nämlich zumindest über das erste Antriebsaggregat und das zweite Antriebsaggregat. Die beiden Antriebsaggregate können grundsätzlich beliebig ausgestaltet sein. Beispielsweise sind die Antriebsaggregate unterschiedlichen Typs, sodass die Antriebseinrichtung insoweit als Hybridantriebseinrichtung ausgestaltet ist. Hierbei kann das erste Antriebsaggregat zum Beispiel in Form einer Brennkraftmaschine vorliegen und das zweite Antriebsaggregat als elektrische Maschine ausgestaltet sein.

Die beiden Antriebsaggregate, nämlich das erste Antriebsaggregat und das zweite Antriebsaggregat, können mittels der Schaltkupplung miteinander koppelbar sein. Das bedeutet, dass mithilfe der Schaltkupplung eine Wirkverbindung, insbesondere eine unmittelbare Wirkverbindung, zwischen dem ersten Antriebsaggregat und dem zweiten Antriebsaggregat herstellbar ist. Unter der unmittelbaren Wirkverbindung ist insbesondere eine Kopplung des ersten Antriebsaggregats und des zweiten Antriebsaggregats zu verstehen, die nicht über das Umlaufrädergetriebes verläuft. Die Kopplung ist bei geschlossener Schaltkupplung bevorzugt starr.

Das zweite Antriebsaggregat ist zusätzlich oder alternativ über das Umlaufgetriebe mit der Abtriebswelle koppelbar. Das Umlaufrädergetriebe kann auch als Planetenrädergetriebe bezeichnet werden und ist vorzugsweise als Umlaufzahnrädergetriebe ausgestaltet. Die Wirkverbindung zwischen dem zweiten Antriebsaggregat und der Abtriebswelle liegt, sofern sie hergestellt ist, also über das Umlaufrädergetriebe vor. Hierzu ist beispielsweise das zweite Antriebsaggregat an ein Getriebeelement des Umlaufrädergetriebes angeschlossen, während die Abtriebswelle an ein anderes Getriebeelement des Umlaufrädergetriebes angeschlossen ist.

Aus dem Stand der Technik ist beispielsweise die Druckschrift DE 10 2006 037 577 A1 bekannt. Diese betrifft einen Nebenaggregatantrieb für ein Kraftfahrzeug mit einem Planetengetriebe, wobei ein erstes Element des Planetengetriebes mit einer ersten Elektromaschine, ein zweites Element mit einem Verbrennungsmotor und ein drittes Element mit mindestens einem Nebenaggregat im Leistungsaustausch stehen. Um sowohl beim Starten des Verbrennungsmotors als auch beim Antreiben des Fahrzeugs durch die erste Elektromaschine einen hohen Wirkungsgrad aufzuweisen, weist der Nebenaggregatantrieb eine erste Kupplung, durch die der Verbrennungsmotor mit der ersten Elektromaschine koppelbar ist, und einen ersten Freilauf auf, durch den das dritte Element des Planetengetriebes nur in eine Drehrichtung drehbar ist.

Weiterhin zeigt die Druckschrift DE 195 81 495 B4 einen Differenzialantriebslader, einschließlich eines mittels einer Motorleistung über eine Differenzialantriebsvorrichtung angetriebenen mechanischen Laders, worin eine Motorausgangswelle an einen Planetenradträger der Differenzialantriebsvorrichtung gekoppelt ist, der mechanische Lader an ein Sonnenrad davon gekoppelt ist und ein Getriebe eines Antriebskraftübertragungssystems für ein Fahrzeug oder eine Antriebswelle, die von einer Antriebswelle in Übertragungsrichtung des Getriebes abzweigt, an ein Hohlrad davon gekoppelt sind.

Es ist Aufgabe der Erfindung, eine Antriebseinrichtung für ein Kraftfahrzeug vorzuschlagen, welche gegenüber bekannten Antriebseinrichtungen Vorteile aufweist, insbesondere sich durch eine hohe Energieeffizienz sowie eine hohe Flexibilität auszeichnet.

Dies wird erfindungsgemäß mit einer Antriebseinrichtung mit den Merkmalen des Anspruchs 1 erreicht. Dabei ist vorgesehen, dass das erste Antriebsaggregat mittels der Schaltkupplung über das zweite Antriebsaggregat und das Umlaufrädergetriebe mit der Abtriebswelle koppelbar ist.

Grundsätzlich soll der Nebentrieb derart in die Antriebseinrichtung integriert sein, dass er beziehungsweise das wenigstens eine Nebenaggregat besonders energieeffizient betrieben werden kann, während gleichzeitig die Antriebseinrichtung flexibel einsetzbar ist, insbesondere in zahlreichen Betriebszuständen des Kraftfahrzeugs. Insbesondere soll eine Wechselwirkung zwischen wenigstens einem der Antriebsaggregate, insbesondere beiden Antriebsaggregaten, und dem Nebentrieb realisiert sein. Das bedeutet, dass der Nebentrieb beziehungsweise die Nebentriebwelle des Nebentriebs bevorzugt wahlweise mittels des ersten Antriebsaggregats, des zweiten Antriebsaggregats und/oder mittels kinetischer Energie des Kraftfahrzeugs angetrieben werden kann. Letzteres ist durch eine von dem ersten Antriebsaggregat unabhängige Anbindung des Nebentriebs beziehungsweise der Nebentriebwelle an die Abtriebswelle der Antriebseinrichtung realisiert.

Dabei ist es vorgesehen, dass die Nebentriebwelle des Nebentriebs mit dem Umlaufrädergetriebe gekoppelt ist. Der Nebentrieb ist insoweit mit wenigstens einem Getriebeelement des Umlaufrädergetriebes wirkverbunden, insbesondere starr und/oder permanent. Das bedeutet, dass der Nebentrieb beziehungsweise die Nebentriebwelle stets dieselbe Drehzahl aufweist wie das Getriebeelement, mit welchem er beziehungsweise sie gekoppelt ist. Vorzugsweise ist die Nebentriebwelle über das Umlaufrädergetriebe mit dem zweiten Antriebsaggregat gekoppelt, insbesondere permanent, oder zumindest koppelbar. Das zweite Antriebsaggregat ist hierzu mit einem anderen Getriebeelement des Umlaufrädergetriebes gekoppelt. Mittels des zweiten Antriebsaggregats kann so zum Beispiel eine Drehzahlregelung der Nebentriebwelle vorgenommen werden. Beispielsweise ist dabei das zweite Antriebsaggregat über das Umlaufrädergetriebe mit der Abtriebswelle gekoppelt, insbesondere permanent, oder zumindest koppelbar. Die Abtriebswelle ist hierzu an ein weiteres Getriebeelement des Umlaufrädergetriebes angebunden, sodass also zweites Antriebsaggregat, Nebentriebwelle und Abtriebswelle mit unterschiedlichen Getriebeelementen des Umlaufrädergetriebes gekoppelt sind.

Durch die Merkmale von Anspruch 1 ist die Nebentriebwelle über das Umlaufrädergetriebe und die Schaltkupplung mit dem ersten Antriebsaggregat wirkverbindbar. Entsprechend kann die Nebentriebwelle mithilfe des ersten Antriebsaggregats, bevorzugt sowohl mithilfe des ersten Antriebsaggregats als auch des zweiten Antriebsaggregats, angetrieben werden. Wenn zudem das Umlaufrädergetriebe mit der Abtriebswelle der Antriebseinrichtung gekoppelt oder zumindest koppelbar ist, was bevorzugt der Fall ist, kann zudem die kinetische Energie des Kraftfahrzeugs zum Antreiben der Nebentriebwelle und mithin des Nebenaggregats herangezogen werden.

Es ist vorgesehen, dass das erste Antriebsaggregat mittels der Schaltkupplung über das zweite Antriebsaggregat mit der Abtriebswelle koppelbar ist. Beispielsweise ist eine Antriebswelle des zweiten Antriebsaggregats drehfest mit einer Antriebswelle des ersten Antriebsaggregats koppelbar, sodass bei geschlossener Schaltkupplung die Antriebswellen des ersten Antriebsaggregats und des zweiten Antriebsaggregats im Wesentlichen dieselbe Drehzahl aufweisen. Hierbei kann es selbstverständlich vorgesehen sein, dass in der Wirkverbindung zwischen dem ersten Antriebsaggregat und dem zweiten Antriebsaggregat eine Schwingungsdämpfungseinrichtung, beispielsweise ein Zweimassenschwungrad oder dergleichen, vorliegt. Dies ist insbesondere der Fall, falls das erste Antriebsaggregat in Form der Brennkraftmaschine vorliegt.

Erfindungsgemäß ist es vorgesehen, dass das erste Antriebsaggregat mittels der Schaltkupplung über das zweite Antriebsaggregat und das Umlaufrädergetriebe mit der Abtriebswelle koppelbar ist. Hierzu ist beispielsweise das Umlaufrädergetriebe beziehungsweise ein Getriebeelement des Umlaufrädergetriebes starr und/oder permanent mit dem zweiten Antriebsaggregat gekoppelt, welches seinerseits mittels der Schaltkupplung mit dem ersten Antriebsaggregat koppelbar ist.

Ein derartiger Aufbau der Antriebseinrichtung ermöglicht eine äußerst flexible Verwendung. So kann es beispielsweise vorgesehen sein, mittels des zweiten Antriebsaggregats die Nebentriebwelle anzutreiben und/oder ein Drehmoment auf die Abtriebswelle der Antriebseinrichtung aufzuprägen, beispielsweise zum Antreiben oder zum Abbremsen des Kraftfahrzeugs. Zudem kann mithilfe des zweiten Antriebsaggregats die Drehzahl der Nebentriebwelle gesteuert und/oder geregelt werden, insbesondere auf eine Solldrehzahl. Weiterhin ist auch bei langsamen Fahrgeschwindigkeiten des Kraftfahrzeugs, dem sogenannten Kriechen, bei welchem beispielsweise eine Fahrgeschwindigkeit von kleiner als 10 km/h oder kleiner als 6 km/h vorliegt, ein Laden eines Energiespeichers mithilfe einer elektrischen Maschine, beispielsweise des zweiten Antriebsaggregats oder eines weiteren Antriebsaggregats möglich.

Auch kann es bei entsprechender Ausgestaltung vorgesehen sein, das erste Antriebsaggregat mithilfe des zweiten Antriebsaggregats zu starten, sodass also das zweite Antriebsaggregat als Starter für das erste Antriebsaggregat vorliegt. Ist neben dem ersten Antriebsaggregat und dem zweiten Antriebsaggregat das weitere Antriebsaggregat vorgesehen, so kann dieses mithilfe des zweiten Antriebsaggregats zumindest kurzzeitig entlastet werden. Auch kann die Dauerleistung der Antriebseinrichtung zumindest geringfügig erhöht werden.

Weiterhin ergibt sich bei entsprechender Ausgestaltung der Vorteil, dass das Antreiben der Nebentriebwelle unter Verwendung der kinetischen Energie des Kraftfahrzeugs ein Bremsen des Kraftfahrzeugs bewirkt. Dies ist vorteilhaft, wenn ein rekuperierendes Bremsen des Kraftfahrzeugs mithilfe des zweiten Antriebsaggregats und/oder des weiteren Antriebsaggregats nicht möglich ist, beispielsweise weil der Energiespeicher keine weitere Energie aufnehmen kann, insbesondere weil er vollständig gefüllt ist. Insgesamt wird durch die Integration des Nebentriebs in die Antriebseinrichtung eine hochintegrierte Antriebseinrichtung realisiert, welche in zahlreichen Betriebszuständen des Kraftfahrzeugs besonders energieeffizient betrieben werden kann.

Eine weitere Ausgestaltung der Erfindung sieht vor, dass das Nebenaggregat mittels einer Nebenaggregatschaltkupplung mit der Nebentriebwelle koppelbar ist.

Das Nebenaggregat ist also mittels der Nebenaggregatschaltkupplung mit der Nebentriebwelle koppelbar. In der Wirkverbindung zwischen dem Nebenaggregat und der Nebentriebwelle liegt insoweit die Nebenaggregatschaltkupplung vor. Mithilfe der Nebenaggregatschaltkupplung ist das Nebenaggregat wahlweise mit der Nebentriebwelle gekoppelt oder von ihr entkoppelt. Das bedeutet, dass das Nebenaggregat auch bei angetriebener Nebentriebwelle, also bei einer Drehzahl der Nebentriebwelle, welche von Null verschieden ist, durch Entkoppeln von der Nebentriebwelle außer Betrieb gesetzt werden kann.

Sind mehrere Nebenaggregate vorgesehen, so können diese gemeinsam über die Nebenaggregatschaltkupplung mit der Nebentriebwelle koppelbar sein, sodass die Nebenaggregatschaltkupplung als gemeinsame Nebenaggregatschaltkupplung vorliegt. Bevorzugt ist jedoch mehreren der Nebenaggregate, insbesondere allen der Nebenaggregate, jeweils eine derartige Nebenaggregatschaltkupplung zugeordnet, sodass jeweils mehrere der Nebenaggregate beziehungsweise jedes der Nebenaggregate wahlweise mit der Nebentriebwelle gekoppelt oder von ihr entkoppelt ist.

Eine weitere bevorzugte Ausführungsform der Erfindung sieht vor, dass das Umlaufrädergetriebe ein erstes Getriebeelement, ein zweites Getriebeelement und ein drittes Getriebeelement aufweist, wobei das erste Getriebeelement und das zweite Getriebeelement über wenigstens ein an dem dritten Getriebeelement drehbar gelagertes Umlaufrad miteinander gekoppelt sind, wobei das erste Antriebsaggregat sowie das zweite Antriebsaggregat mit demselben und nur demselben der Getriebeelemente gekoppelt sind und die Nebentriebwelle mit einem anderen der Getriebeelemente gekoppelt ist. Das Umlaufrädergetriebe weist als Getriebeelemente üblicherweise ein Hohlrad, ein Sonnenrad sowie einen Umlaufradträger auf, wobei an letzterem das Umlaufrad drehbar gelagert ist. Über das Umlaufrad und mithin den Umlaufradträger sind das erste Getriebeelement und das zweite Getriebeelement miteinander gekoppelt, insbesondere permanent. Vorzugsweise kämmt hierzu eine Verzahnung des Umlaufrads mit einer Verzahnung des Hohlrads und einer Verzahnung des Sonnenrads.

Das erste Antriebsaggregat, das zweite Antriebsaggregat und die Nebentriebwelle sind nun jeweils mit einem der Getriebeelemente gekoppelt. Hierbei sind das erste Antriebsaggregat und das zweite Antriebsaggregat mit demselben Getriebeelement und nur mit demselben Getriebeelement gekoppelt. Die Nebentriebwelle ist mit wenigstens einem anderen der Getriebeelemente koppelbar. Insbesondere ist die Nebentriebwelle permanent mit einem der Getriebeelemente gekoppelt und mit einem weiteren der Getriebeelemente koppelbar, wobei die beiden Getriebeelemente, mit welchen die Nebentriebwelle gekoppelt beziehungsweise koppelbar ist, von demjenigen der Getriebeelemente verschieden sind, welches mit dem ersten Antriebsaggregat und dem zweiten Antriebsaggregat gekoppelt ist.

Eine bevorzugte weitere Ausgestaltung der Erfindung sieht vor, dass das zweite Antriebsaggregat mit dem als Hohlrad ausgebildeten ersten Getriebeelement, die Nebentriebwelle mit dem als Sonnenrad ausgebildeten zweiten Getriebeelement und/oder die Abtriebswelle mit dem als Umlaufradträger ausgebildeten dritten Getriebeelement gekoppelt ist. Auf eine derartige Ausgestaltung des Umlaufrädergetriebes, aufweisend das Hohlrad, das Sonnenrad und den Umlaufradträger, wurde vorstehend bereits hingewiesen. Es wird nun deutlich, dass das zweite Antriebsaggregat, die Nebentriebwelle und die Abtriebswelle mit unterschiedlichen Getriebeelementen gekoppelt sind, vorzugsweise starr und/oder permanent. Bevorzugt ist das erste Antriebsaggregat über das zweite Antriebsaggregat mithilfe der Schaltkupplung mit dem ersten Getriebeelement koppelbar.

Eine bevorzugte weitere Ausführungsform der Erfindung sieht vor, dass wenigstens zwei der Getriebeelemente, insbesondere das Sonnenrad und der Umlaufradträger, mittels einer Verblockungskupplung miteinander koppelbar sind. Über die Verblockungskupplung ist insoweit eine starre Kopplung der beiden Getriebeelemente miteinander möglich. Bei geöffneter Verblockungskupplung sind die Getriebeelemente voneinander entkoppelt, während sie bei geschlossener Verblockungskupplung starr, also drehfest, miteinander verbunden sind. Mithilfe der Verblockungskupplung kann insoweit ein Verblocken des Umlaufrädergetriebes vorgenommen werden. Sind die beiden Getriebeelemente mittels der Verblockungskupplung miteinander gekoppelt, so läuft das Umlaufrädergetriebe im sogenannten Blockumlauf, in welchem die Getriebeelemente dieselbe Drehzahl aufweisen. Die Verblockungskupplung kann zum Beispiel in Form einer schaltbaren Kupplung, insbesondere einer Reibkupplung, oder als Freilauf ausgestaltet sein. Letzterer setzt die beiden Getriebeelemente in einer Drehrichtung gegeneinander fest, während er sie in entgegengesetzter Drehrichtung freigibt beziehungsweise voneinander entkoppelt.

Eine weitere Ausgestaltung der Erfindung sieht vor, dass wenigstens eines der Getriebeelemente mittels einer Bremse bremsbar ist. Die Bremse kann zusätzlich oder alternativ zu der vorstehend beschriebenen Verblockungskupplung vorgesehen sein. Die Bremse dient dem Bremsen des wenigstens einen der Getriebeelemente gegenüber einem Gehäuse des Umlaufrädergetriebes beziehungsweise der Antriebseinrichtung. Mithilfe der Bremse kann insoweit die Drehzahl des Getriebeelements reduziert werden, insbesondere bis auf Null, sodass das Getriebeelement mithilfe der Bremse festsetzbar ist. Selbstverständlich kann es jedoch vorgesehen sein, dass die Bremse nicht nur ein vollständiges Festsetzen des Getriebeelements ermöglicht, sondern vielmehr ein abgestuftes Bremsen. Dies erfolgt bevorzugt derart, dass mithilfe der Bremse die Istdrehzahl des Getriebeelements auf eine Solldrehzahl eingestellt wird, insbesondere steuernd und/oder regelnd.

Eine Weiterbildung der Erfindung sieht vor, dass das erste Antriebsaggregat über eine weitere Schaltkupplung, insbesondere unter Umgehung des Umlaufrädergetriebes, mit einem Gangwechselgetriebe koppelbar ist, wobei eine Ausgangswelle des Gangwechselgetriebes mit der Abtriebswelle gekoppelt ist oder die Abtriebswelle ausbildet. Die weitere Schaltkupplung liegt in Form einer lösbaren Kupplung vor, mittels welcher die Wirkverbindung zwischen dem ersten Antriebsaggregat und dem Gangwechselgetriebe wahlweise hergestellt oder unterbrochen ist. Bei vollständig geschlossener weiterer Schaltkupplung ist vorzugsweise das erste Antriebsaggregat beziehungsweise seine Antriebswelle starr mit dem Gangwechselgetriebe beziehungsweise einer Eingangswelle des Gangwechselgetriebes gekoppelt. Die weitere Schaltkupplung ist zum Beispiel als Anfahrkupplung ausgestaltet. Alternativ kann sie als Klauenkupplung, Reibkupplung oder als Freilauf vorliegen. Sie kann Bestandteil eines Getriebes, insbesondere eines Gangwechselgetriebes, sein.

Die Eingangswelle ist über wenigstens einen Radsatz, insbesondere einen Zahnradsatz, mit der Ausgangswelle des Gangwechselgetriebes verbunden beziehungsweise verbindbar. Das Gangwechselgetriebe erlaubt das Einstellen eines Fahrgangs, welcher aus einer Mehrzahl beziehungsweise Vielzahl von möglichen Fahrgängen ausgewählt wird. Insoweit sind mithilfe des Gangwechselgetriebes unterschiedliche Übersetzungen zwischen dem Antriebsaggregat beziehungsweise der weiteren Schaltkupplung einerseits und der Abtriebswelle andererseits einstellbar. Die Ausgangswelle des Gangwechselgetriebes ist vorzugsweise mit der Abtriebswelle der Antriebseinrichtung gekoppelt, insbesondere starr und/oder permanent. Alternativ kann es jedoch auch vorgesehen sein, dass die Ausgangswelle selbst die Abtriebswelle darstellt beziehungsweise sie ausbildet.

Die Kopplung des ersten Antriebsaggregats mit dem Gangwechselgetriebe über die weitere Schaltkupplung ist vorzugsweise unter Umgehung des Umlaufrädergetriebes vorgesehen. Bei geschlossener weiterer Schaltkupplung wird Drehmoment zwischen dem ersten Antriebsaggregat und dem Gangwechselgetriebe beziehungsweise umgekehrt also nicht über das Umlaufrädergetriebe übertragen, sondern vielmehr an diesem vorbei. Dies ermöglicht einen Betrieb der Antriebseinrichtung, in welchem das erste Antriebsaggregat unter Umgehung des Umlaufrädergetriebes und mithin des zweiten Antriebsaggregats die Abtriebswelle antreibt.

Hierbei kann es vorgesehen sein, dass die Abtriebswelle zusätzlich über das Umlaufrädergetriebe mithilfe des zweiten Antriebsaggregats angetrieben wird beziehungsweise das zweite Antriebsaggregat über das Umlaufrädergetriebe unter Verwendung von kinetischer Energie des Kraftfahrzeugs beziehungsweise der Drehbewegung der Abtriebswelle angetrieben wird. Weiterhin ist es möglich, das erste Antriebsaggregat sowohl über die weitere Schaltkupplung als auch über die Schaltkupplung - und insoweit über das Umlaufrädergetriebe beziehungsweise das zweite Antriebsaggregat und das Umlaufrädergetriebe- mit der Abtriebswelle zu koppeln. Das von dem ersten Antriebsaggregat bereitgestellte Drehmoment wird insoweit parallel einerseits über die weitere Schaltkupplung und andererseits über die Schaltkupplung an die Abtriebswelle übertragen.

Eine weitere Ausgestaltung der Erfindung sieht vor, dass ein weiteres Antriebsaggregat mittels der weiteren Schaltkupplung mit dem ersten Antriebsaggregat koppelbar ist, insbesondere über ein weiteres Umlaufrädergetriebe. Zusätzlich zu dem ersten Antriebsaggregat und dem zweiten Antriebsaggregat ist insoweit das weitere Antriebsaggregat vorgesehen. Bevorzugt liegt das weitere Antriebsaggregat als elektrische Maschine vor. Das zweite Antriebsaggregat und das weitere Antriebsaggregat können identisch oder unterschiedlich ausgestaltet sein. In ersterem Fall weisen die Antriebsaggregate beispielsweise dieselbe Nennleistung, in letzterem Fall unterschiedliche Nennleistungen auf.

Das erste Antriebsaggregat und das weitere Antriebsaggregat sind über die weitere Schaltkupplung miteinander koppelbar. Bei geöffneter weiterer Schaltkupplung sind die beiden Antriebsaggregate insoweit vollständig voneinander entkoppelt, während sie bei geschlossener, insbesondere vollständig geschlossener, weiterer Schaltkupplung miteinander wirkverbunden sind.

Die Wirkverbindung kann dabei insbesondere über das weitere Umlaufrädergetriebe vorliegen. Das weitere Umlaufrädergetriebe weist in Analogie zu dem Umlaufrädergetriebe ein erstes Getriebeelement, ein zweites Getriebeelement und ein drittes Getriebeelement auf, wobei das erste Getriebeelement und das zweite Getriebeelement über wenigstens ein an dem dritten Getriebeelement drehbar gelagertes Umlaufrad miteinander gekoppelt sind. Das weitere Umlaufrädergetriebe kann grundsätzlich analog zu dem bereits beschriebenen Umlaufrädergetriebe ausgestaltet sein, sodass auf die vorstehenden Ausführungen hingewiesen wird.

Bevorzugt sind das erste Antriebsaggregat und das weitere Antriebsaggregat mit unterschiedlichen Getriebeelementen des weiteren Umlaufrädergetriebes gekoppelt. Vorzugsweise ist das weitere Antriebsaggregat starr und/oder permanent mit dem weiteren Umlaufrädergetriebe gekoppelt, während das erste Antriebsaggregat über die weitere Schaltkupplung mit dem weiteren Umlaufrädergetriebe beziehungsweise dem entsprechenden Getriebeelement koppelbar ist.

Das weitere Umlaufrädergetriebe ist beispielsweise schaltbar ausgestaltet. Hierzu verfügt es analog zu dem Umlaufrädergetriebe über eine Verblockungskupplung. Diese dient beispielsweise dazu, das als Hohlrad ausgebildete erste Getriebeelement mit dem als Umlaufradträger ausgebildeten dritten Getriebeelement zu koppeln, sodass auch hier ein Blockumlauf realisiert werden kann. Vorzugsweise ist das erste Antriebsaggregat mit dem als Sonnenrad ausgebildeten zweiten Getriebeelement koppelbar und das zweite Antriebsaggregat mit dem Hohlrad starr und/oder permanent gekoppelt. Das Gangwechselgetriebe beziehungsweise seine Eingangswelle ist mit dem Umlaufradträger des weiteren Umlaufrädergetriebes gekoppelt, vorzugsweise ebenfalls starr und/oder permanent.

Schließlich kann im Rahmen einer weiteren Ausführungsform der Erfindung vorgesehen sein, dass ein weiteres Nebenaggregat mit der Nebentriebwelle koppelbar ist, insbesondere mit einer Übersetzung, die mit einer zwischen dem Nebenaggregat und der Nebentriebwelle vorliegenden Übersetzung verschieden ist. Hierauf wurde vorstehend bereits hingewiesen. Zusätzlich zu dem Nebenaggregat kann das weitere Nebenaggregat vorliegen. Sowohl das Nebenaggregat als auch das weitere Nebenaggregat sind jeweils mit der Nebentriebwelle koppelbar beziehungsweise von ihr entkoppelbar. Dabei kann die Übersetzung, welche zwischen der Nebentriebwelle und dem weiteren Nebenaggregat realisiert ist, von der Übersetzung zwischen der Nebentriebwelle und dem Nebenaggregat abweichen. Alternativ kann selbstverständlich dieselbe Übersetzung vorliegen.

Beschrieben wird weiterhin ein Verfahren zum Betreiben einer Antriebseinrichtung für ein Kraftfahrzeug, insbesondere einer Antriebseinrichtung gemäß den vorstehenden Ausführungen, mit einem ersten Antriebsaggregat, einem zweiten Antriebsaggregat sowie einem mit dem zweiten Antriebsaggregat gekoppelten Umlaufrädergetriebe, wobei das zweite Antriebsaggregat über das Umlaufrädergetriebe mit einer Abtriebswelle der Antriebseinrichtung und/oder mittels einer Schaltkupplung mit dem ersten Antriebsaggregat gekoppelt werden kann. Dabei ist vorgesehen, dass eine Nebentriebwelle eines wenigstens ein Nebenaggregat aufweisenden Nebentriebs der Antriebseinrichtung mit dem Umlaufrädergetriebe gekoppelt ist.

Auf die Vorteile einer derartigen Ausgestaltung der Antriebseinrichtung beziehungsweise einer derartigen Vorgehensweise wurde bereits hingewiesen. Sowohl die Antriebseinrichtung als auch das Verfahren zu ihrem Betreiben können gemäß den vorstehenden Ausführungen weitergebildet sein, sodass insoweit auf diese verwiesen wird.

Besonders bevorzugt ist es vorgesehen, mittels des zweiten Antriebsaggregats eine Drehzahlregelung der Nebentriebwelle vorzunehmen. Hierzu ist bevorzugt das zweite Antriebsaggregat von dem ersten Antriebsaggregat entkoppelt beziehungsweise ist die Schaltkupplung geöffnet, insbesondere vollständig. Weiterhin ist die Verblockungskupplung - falls vorgesehen - geöffnet, sodass die Getriebeelemente und bezüglich einander freigegeben, also nicht miteinander gekoppelt sind. Beispielsweise ist es nun vorgesehen, die Nebentriebwelle mit der Abtriebswelle zu koppeln und entsprechend - falls sich das Kraftfahrzeug in Bewegung befindet - mit kinetischer Energie des Kraftfahrzeugs anzutreiben. Selbstverständlich kann die beschriebene Vorgehensweise jedoch auch im Stillstand des Kraftfahrzeugs Verwendung finden.

Die Drehzahl der Nebentriebwelle stellt sich bei geöffneter Verblockungskupplung in Abhängigkeit von der Drehzahl der Abtriebswelle und der Drehzahl des zweite Antriebsaggregats ein. Entsprechend ist es vorgesehen, die Drehzahl des zweite Antriebsaggregats derart zu wählen und einzustellen, dass die Drehzahl der Nebentriebwelle unabhängig von der Drehzahl der Abtriebswelle einer Solldrehzahl entspricht. Somit kann beispielsweise die Drehzahl der Nebentriebwelle mittels des zweite Antriebsaggregats, insbesondere auch bei einer Drehzahländerung der Abtriebswelle, konstant gehalten beziehungsweise auf die Solldrehzahl eingestellt, insbesondere geregelt, werden.

Bei Stillstand der Abtriebswelle wird nun die gesamte an der Nebentriebwelle anliegende Leistung mittels des zweite Antriebsaggregats bereitgestellt. Je höher die Drehzahl der Abtriebswelle, umso höher wird nun - bei gleichbleibender Drehzahl der Nebentriebwelle- der Anteil der an der Nebentriebwelle anliegenden Leistung, die von der Abtriebswelle bereitgestellt wird. Umgekehrt wird selbstredend der von dem zweite Antriebsaggregat bereitgestellte Anteil geringer.

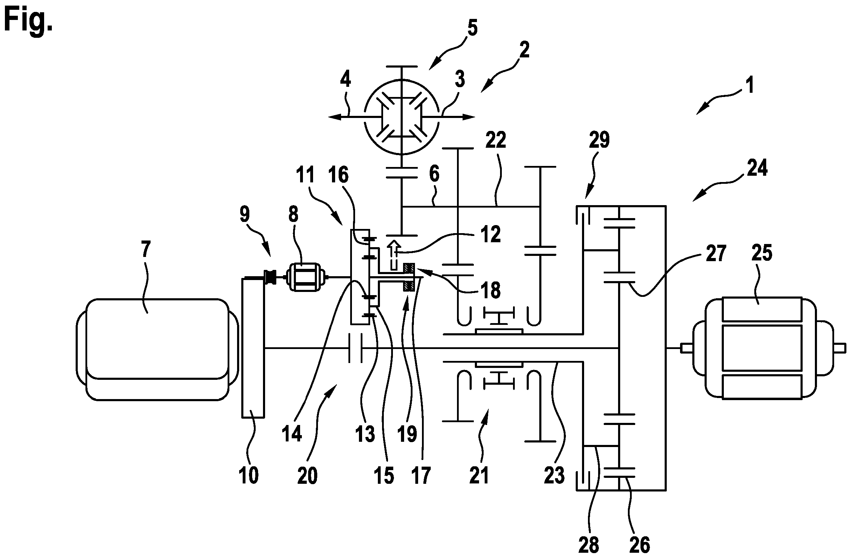

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Antriebseinrichtung für ein Kraftfahrzeug.

Die Figur zeigt eine schematische Darstellung einer Antriebseinrichtung 1 für ein Kraftfahrzeug, welches hier nicht näher dargestellt ist. Die Antriebseinrichtung 1 dient dem Antreiben einer Radachse 2 des Kraftfahrzeugs, welche zwei Teilachsen 3 und 4 aufweist, die über ein Getriebe 5, insbesondere ein Achsdifferentialgetriebe, mit einer Abtriebswelle 6 der Antriebseinrichtung 1 wirkverbunden sind. Jeder der Teilachsen 3 und 4 ist vorzugsweise wenigstens ein hier nicht dargestelltes Rad des Kraftfahrzeugs zugeordnet beziehungsweise mit diesem starr und/oder permanent verbunden.

Die Antriebseinrichtung 1 verfügt über ein erstes Antriebsaggregat 7 und ein zweites Antriebsaggregat 8. Die beiden Antriebsaggregate 7 und 8 sind mittels einer Schaltkupplung 9 wahlweise gekoppelt oder entkoppelt. Es kann vorgesehen sein, dass in der Wirkverbindung zwischen dem ersten Antriebsaggregat 7 und der Schaltkupplung 9 eine Schwingungsdämpfungseinrichtung 10 vorgesehen ist, sodass die Wirkverbindung zwischen den Antriebsaggregaten 7 und 8 bei geschlossener Schaltkupplung 9 ebenfalls über diese Schwingungsdämpfungseinrichtung 10 vorliegt.

Das zweite Antriebsaggregat 8 ist über ein Umlaufrädergetriebe 11 mit der Abtriebswelle 6 der Antriebseinrichtung 1 koppelbar oder gekoppelt, insbesondere permanent. Die hierzu notwendig Wirkverbindung zwischen dem Umlaufrädergetriebe 11 und der Abtriebswelle 6 ist durch den Pfeil 12 lediglich angedeutet.

Das Umlaufrädergetriebe 11 weist ein erstes Getriebeelement 13, ein zweites Getriebeelement 14 und ein drittes Getriebeelement 15 auf. Das erste Getriebeelement 13 ist als Hohlrad, das zweite Getriebeelement 14 als Sonnenrad und das dritte Getriebeelement 15 als Umlaufradträger ausgestaltet. An dem dritten Getriebeelement 15 ist wenigstens ein Umlaufrad 16, welches auch als Planetenrad bezeichnet werden kann, drehbar gelagert. In dem hier dargestellten Ausführungsbeispiel sind zwei Umlaufräder 16 vorgesehen. Über das wenigstens eine Umlaufrad 16 ist eine Wirkverbindung zwischen dem ersten Getriebeelement 13 und dem zweiten Getriebeelement 14 hergestellt. Hierzu kämmt beispielsweise eine Verzahnung des Umlaufrads 16 sowohl mit einer Verzahnung des ersten Getriebeelements 13 als auch mit einer Verzahnung des zweiten Getriebeelements 14.

Das zweite Antriebsaggregat 8 ist vorzugsweise mit dem ersten Getriebeelement 13 gekoppelt, insbesondere starr und/oder permanent. Das bedeutet, dass das erste Antriebsaggregat 7 mittels der Schaltkupplung 9 mit dem ersten Getriebeelement 13 unmittelbar koppelbar ist, also nicht über das Umlaufrädergetriebe 11. Das zweite Getriebeelement 14 ist mit einer Nebentriebwelle 17 eines Nebentriebs 18 gekoppelt, vorzugsweise starr und/oder permanent. Das dritte Getriebeelement 15 ist dagegen über die Wirkverbindung gemäß dem Pfeil 12 mit der Abtriebswelle 6 gekoppelt, vorzugsweise ebenfalls starr und/oder permanent.

Dem Umlaufrädergetriebe 11 kann eine Verblockungskupplung 19 zugeordnet sein. Mit dieser können das zweite Getriebeelement 14 und das dritte Getriebeelement 15 gegeneinander drehfest festgesetzt werden. Der Nebentrieb 18 verfügt über wenigstens ein hier nicht dargestelltes Nebenaggregat. Dieses Nebenaggregat ist mit der Nebentriebwelle 17 gekoppelt, vorzugsweise starr und/oder permanent, oder mit ihr koppelbar, beispielsweise mittels einer Nebenaggregatschaltkupplung. Dies ermöglicht es, das Nebenaggregat wahlweise mit der Nebentriebwelle zu koppeln oder von ihr zu entkoppeln, sodass das Nebenaggregat wahlweise angetrieben oder nicht angetrieben wird.

Die Antriebseinrichtung 1 verfügt weiterhin über eine weitere Schaltkupplung 20, über die es mit einem Gangwechselgetriebe 21 koppelbar ist, insbesondere unter Umgehung des Umlaufrädergetriebes 11. Eine Ausgangswelle 22 des Gangwechselgetriebes 21 ist mit der Abtriebswelle 6 gekoppelt oder bildet diese zumindest teilweise aus. Die Wirkverbindung zwischen dem ersten Antriebsaggregat 7 und dem Gangwechselgetriebe 21 beziehungsweise einer Eingangswelle 23 des Gangwechselgetriebes 21 bei zumindest teilweise geschlossener weiterer Schaltkupplung 20 liegt über ein weiteres Umlaufrädergetriebe 24 vor. Über dieses weitere Umlaufrädergetriebe 24 kann zudem ein weiteres Antriebsaggregat 25 mit dem ersten Antriebsaggregat 7 und/oder der Abtriebswelle 6 beziehungsweise dem Gangwechselgetriebe 21 koppelbar beziehungsweise gekoppelt sein.

Das weitere Umlaufrädergetriebe 24 verfügt analog zu dem vorstehend beschriebenen Umlaufrädergetriebe 11 über ein erstes Getriebeelement 26, ein zweites Getriebeelement 27 und ein drittes Getriebeelement 28. Diese sind gemäß den Getriebeelementen 13, 14 und 15 aufgebaut, sodass auf die entsprechenden Ausführungen verwiesen wird. Vorzugsweise ist das erste Getriebeelement 26 mit dem weiteren Antriebsaggregat 25 gekoppelt, insbesondere starr und/oder permanent. Das zweite Getriebeelement 27 ist dagegen über die weitere Schaltkupplung 20 mit dem ersten Antriebsaggregat 7 koppelbar.

Das dritte Getriebeelement 28 ist über das Gangwechselgetriebe 21 mit der Abtriebswelle 6 gekoppelt oder zumindest koppelbar. Hierzu ist beispielsweise das dritte Getriebeelement 28 mit der Eingangswelle 23 des Gangwechselgetriebes 21 gekoppelt, insbesondere starr und/oder permanent. Dem weiteren Umlaufrädergetriebe 24 ist eine weitere Verblockungskupplung 29 zugeordnet. Mittels dieser kann das erste Getriebeelement 26 bezüglich des dritten Getriebeelements 28 festgesetzt werden, also die Getriebeelemente 26 und 28 drehfest miteinander verbunden werden. Hierdurch sind unterschiedliche Übersetzungen einstellbar.

Die hier beschriebene Antriebseinrichtung 1 ermöglicht einen besonders energieeffizienten Betrieb des Nebentriebs 18 beziehungsweise der gesamten Antriebseinrichtung 1. Zu diesem Zweck ist der Nebentrieb 18 in die Antriebseinrichtung 1 integriert. Auch ist ein Betreiben des Nebentriebs 18 unabhängig von dem ersten Antriebsaggregat 7 und dem weiteren Antriebsaggregat 25 mittels des zweiten Antriebsaggregats 8 möglich. Das zweite Antriebsaggregat 8 kann jedoch auch zum Beeinflussen der Abtriebswelle 6 und/oder des ersten Antriebsaggregats 7 herangezogen werden, beispielsweise also zum Bremsen oder Beschleunigen des Kraftfahrzeugs.

Bevorzugt sind das zweite Antriebsaggregat 8 und das weitere Antriebsaggregat 25 verschieden voneinander ausgestaltet. Insbesondere ist die Nennleistung des zweiten Antriebsaggregats 8 deutlich kleiner als die des weiteren Antriebsaggregats 25. Beispielsweise beträgt die Nennleistung des zweiten Antriebsaggregats 8 höchstens 50 %, höchstens 40 %, höchstens 30 %, höchstens 25 %, höchstens 20 %, höchstens 15 % oder höchstens 10 % der Nennleistung des weiteren Antriebsaggregats 25.

Besonders bevorzugt ist es vorgesehen, mittels des zweiten Antriebsaggregats 8 eine Drehzahlregelung der Nebentriebwelle 17 vorzunehmen. Hierzu ist bevorzugt das zweite Antriebsaggregat 8 von dem ersten Antriebsaggregat 7 entkoppelt beziehungsweise ist die Schaltkupplung 9 geöffnet, insbesondere vollständig. Weiterhin ist die Verblockungskupplung 19 geöffnet, sodass die Getriebeelemente 14 und 15 bezüglich einander freigegeben, also nicht miteinander gekoppelt sind. Beispielsweise ist es nun vorgesehen, die Nebentriebwelle 17 mit der Abtriebswelle 6 zu koppeln und entsprechend - falls sich das Kraftfahrzeug in Bewegung befindet - mit kinetischer Energie des Kraftfahrzeugs anzutreiben. Selbstverständlich kann die beschriebene Vorgehensweise jedoch auch im Stillstand des Kraftfahrzeugs Verwendung finden.

Die Drehzahl der Nebentriebwelle 17 stellt sich bei geöffneter Verblockungskupplung 19 in Abhängigkeit von der Drehzahl der Abtriebswelle 6 und der Drehzahl des zweiten Antriebsaggregats 8 ein. Entsprechend ist es vorgesehen, die Drehzahl des zweiten Antriebsaggregats 8 derart zu wählen und einzustellen, dass die Drehzahl der Nebentriebwelle 17 unabhängig von der Drehzahl der Abtriebswelle 6 einer Solldrehzahl entspricht. Somit kann beispielsweise die Drehzahl der Nebentriebwelle 17 mittels des zweiten Antriebsaggregats 8, insbesondere auch bei einer Drehzahländerung der Abtriebswelle 6, konstant gehalten beziehungsweise auf die Solldrehzahl eingestellt, insbesondere geregelt, werden.

Bei Stillstand der Abtriebswelle 6 wird nun die gesamte an der Nebentriebwelle 17 anliegende Leistung mittels des zweiten Antriebsaggregats 8 bereitgestellt. Je höher die Drehzahl der Abtriebswelle 6, umso höher wird nun - bei gleichbleibender Drehzahl der Nebentriebwelle 17 - der Anteil der an der Nebentriebwelle 17 anliegenden Leistung, die von der Abtriebswelle 6 bereitgestellt wird. Umgekehrt wird selbstredend der von dem zweiten Antriebsaggregat 8 bereitgestellte Anteil geringer.

Zusätzlich oder alternativ kann es vorgesehen sein, die Abtriebswelle 6 über das Umlaufrädergetriebe 11 mit dem ersten Antriebsaggregat 7 zu koppeln, insbesondere drehfest. Hierzu werden beispielsweise die Schaltkupplung 9 und die Verblockungskupplung 19 geschlossen, insbesondere vollständig. Hierbei ist bevorzugt die Schaltkupplung 20 geöffnet, wenngleich das Koppeln der Abtriebswelle 6 mit dem ersten Antriebsaggregat 7 über das weitere Umlaufrädergetriebe 11 auch bei geschlossener Schaltkupplung 20 vorgenommen werden kann, insbesondere zum Verblocken der Abtriebswelle 6.

Auf diese Art und Weise kann beispielsweise ein Schubdrehmoment des ersten Antriebsaggregats 7 an der Abtriebswelle 6 bereitgestellt werden, insbesondere zum Bremsen der Abtriebswelle 6 und mithin des Kraftfahrzeugs. Beispielsweise kann diese Vorgehensweise Anwendung finden, wenn das zweite Antriebsaggregat 8 nicht zum Rekuperieren betrieben werden kann, insbesondere aufgrund eines vollen Energiespeichers. Der Energiespeicher dient normalerweise dem Zwischenspeichern der von dem zweiten Antriebsaggregat 8 während des Rekuperierens bereitgestellten elektrischen Energie. Ist der Energiespeicher jedoch vollständig gefüllt oder weist einen Ladestand auf, der größer ist als ein Maximalladestand, so soll das erste Antriebsaggregat 7 auf die beschriebene Art und Weise zum Bremsen der Abtriebswelle 6 herangezogen werden.

## Patentansprüche

1. Antriebseinrichtung (1) für ein Kraftfahrzeug, mit einem ersten Antriebsaggregat (7), einem zweiten Antriebsaggregat (8) sowie einem mit dem zweiten Antriebsaggregat (8) gekoppelten Umlaufrädergetriebe (11), wobei das zweite Antriebsaggregat (8) über das Umlaufrädergetriebe (11) mit einer Abtriebswelle (6) der Antriebseinrichtung (1) und mittels einer Schaltkupplung (9) mit dem ersten Antriebsaggregat (7) koppelbar ist, wobei eine Nebentriebwelle (17) eines wenigstens ein Nebenaggregat aufweisenden Nebentriebs (18) der Antriebseinrichtung (1) mit dem Umlaufrädergetriebe (11) gekoppelt ist, **dadurch gekennzeichnet, dass** das erste Antriebsaggregat (7) mittels der Schaltkupplung (9) über das zweite Antriebsaggregat (8) und das Umlaufrädergetriebe (11) mit der Abtriebswelle (6) koppelbar ist.

2. Antriebseinrichtung nach Anspruch 1, **dadurch gekennzeichnet, dass** das Nebenaggregat mittels einer Nebenaggregatschaltkupplung mit der Nebentriebwelle (17) koppelbar ist.

3. Antriebseinrichtung nach einem der vorhergehenden Ansprüche, **dadurch gekennzeichnet, dass** das Umlaufrädergetriebe (11) ein erstes Getriebeelement (13), ein zweites Getriebeelement (14) und ein drittes Getriebeelement (15) aufweist, wobei das erste Getriebeelement (13) und das zweite Getriebeelement (14) über wenigstens ein an dem dritten Getriebeelement (15) drehbar gelagertes Umlaufrad (16) miteinander gekoppelt sind, wobei das erste Antriebsaggregat (7) sowie das zweite Antriebsaggregat (8) mit demselben und nur demselben der Getriebeelemente (13,14,15) gekoppelt sind und die Nebentriebwelle (17) mit einem anderen der Getriebeelemente (13,14,15) gekoppelt ist.

4. Antriebseinrichtung nach einem der vorhergehenden Ansprüche, **dadurch gekennzeichnet, dass** das zweite Antriebsaggregat (8) mit dem als Hohlrad ausgebildeten ersten Getriebeelement (13), die Nebentriebwelle (17) mit dem als Sonnenrad ausgebildeten zweiten Getriebeelement (14) und/oder die Abtriebswelle (6) mit dem als Umlaufradträger ausgebildeten dritten Getriebeelement (15) gekoppelt ist.

5. Antriebseinrichtung nach einem der vorhergehenden Ansprüche, **dadurch gekennzeichnet, dass** wenigstens zwei der Getriebeelemente (13,14,15), insbesondere das Sonnenrad und der Umlaufradträger, mittels einer Verblockungskupplung (19) miteinander koppelbar sind.

6. Antriebseinrichtung nach einem der vorhergehenden Ansprüche, **dadurch gekennzeichnet, dass** wenigstens eines der Getriebeelemente (13,14,15) mittels einer Bremse bremsbar ist.

7. Antriebseinrichtung nach einem der vorhergehenden Ansprüche, **dadurch gekennzeichnet, dass** das erste Antriebsaggregat (7) über eine weitere Schaltkupplung (20), insbesondere unter Umgehung des Umlaufrädergetriebes (11), mit einem Gangwechselgetriebe (21) koppelbar ist, wobei eine Ausgangswelle (22) des Gangwechselgetriebes (21) mit der Abtriebswelle (6) gekoppelt ist oder die Abtriebswelle (6) ausbildet.

8. Antriebseinrichtung nach Anspruch 7, **dadurch gekennzeichnet, dass** ein weiteres Antriebsaggregat (25) mittels der weiteren Schaltkupplung (20) mit dem ersten Antriebsaggregat (7) koppelbar ist, insbesondere über ein weiteres Umlaufrädergetriebe (24).

9. Antriebseinrichtung nach einem der vorhergehenden Ansprüche, **dadurch gekennzeichnet, dass** ein weiteres Nebenaggregat mit der Nebentriebwelle (17) koppelbar ist, insbesondere mit einer Übersetzung, die von einer zwischen dem Nebenaggregat und der Nebentriebwelle (17) vorliegenden Übersetzung verschieden ist.

## Claims

1. Drive apparatus (1) for a motor vehicle, comprising a first drive assembly (7), a second drive assembly (8) and an epicyclic gear set (11) that is coupled to the second drive assembly (8), wherein the second drive assembly (8) can be coupled via the epicyclic gear set (11) to a driven shaft (6) of the drive apparatus (1) and by means of a shifting clutch (9) to the first drive assembly (7), wherein an auxiliary drive shaft (17) of an auxiliary drive (18) of the drive apparatus (1) having at least one auxiliary assembly is coupled to the epicyclic gear set (11), **characterised in that** the first drive assembly (7) can be coupled to the output shaft (6) by means of the shifting clutch (9) via the second drive assembly (8) and the epicyclic gear set (11).

2. Drive apparatus according to claim 1, **characterised in that** the auxiliary assembly can be coupled to the auxiliary drive shaft (17) by means of an auxiliary assembly shifting clutch.

3. Drive apparatus according to any one of the preceding claims, **characterised in that** the epicyclic gear set (11) has a first gear element (13), a second gear element (14) and a third gear element (15), wherein the first gear element (13) and the second gear element (14) can be coupled to one another via at least one planetary gear (16) that is rotatably mounted on the third gear element (15), wherein the first drive assembly (7) and the second drive assembly (8) are coupled to the same and only to the same one of the gear elements (13, 14, 15) and the auxiliary drive shaft (17) is coupled to another of the gear elements (13, 14, 15).

4. Drive apparatus according to any one of the preceding claims, **characterised in that** the second drive assembly (8) is coupled to the first gear element (13) that is in the form of a ring gear, the auxiliary drive shaft (17) is coupled to the second gear element (14) that is configured as a sun gear and/or the driven shaft (6) is coupled to the third gear element (15) that is in the form of an epicyclic gear carrier.

5. Drive apparatus according to any one of the preceding claims, **characterised in that** at least two of the gear elements (13, 14, 15), in particular the sun gear and the epicyclic gear carrier, can be coupled to one another by means of a blocking clutch (19).

6. Drive apparatus according to any one of the preceding claims, **characterised in that** at least one of the gear elements (13, 14, 15) can be braked by means of a brake.

7. Drive apparatus according to any one of the preceding claims, **characterised in that** the first drive assembly (7) can be coupled to a gear-change gearbox (21) via a further shifting clutch (20), in particular bypassing the epicyclic gear set (11), wherein an output shaft (22) of the gear-change gearbox (21) is coupled to the driven shaft (6) or forms the driven shaft (6).

8. Drive apparatus according to claim 7, **characterised in that** a further drive assembly (25) can be coupled to the first drive assembly (7) by means of the further shifting clutch (20), in particular via a further epicyclic gear set (24).

9. Drive apparatus according to any one of the preceding claims, **characterised in that** a further auxiliary assembly can be coupled to the auxiliary drive shaft (17), in particular with a transmission ratio which is different from a transmission ratio present between the auxiliary assembly and the auxiliary drive shaft (17).

## Revendications

1. Dispositif d'entraînement (1) pour un véhicule automobile, avec un premier groupe d'entraînement (7), un second groupe d'entraînement (8) ainsi qu'un engrenage épicycloïdal (11) couplé au second groupe d'entraînement (8), dans lequel le second groupe d'entraînement (8) peut être couplé par le biais de l'engrenage épicycloïdal (11) avec un arbre de sortie (6) du dispositif d'entraînement (1) et au moyen d'une liaison de commutation (9) avec le premier groupe d'entraînement (7), dans lequel un arbre de transmission auxiliaire (17) d'une transmission auxiliaire (18) présentant au moins un groupe auxiliaire du dispositif d'entraînement (1) est couplé avec l'engrenage épicycloïdal (11), **caractérisé en ce que** le premier groupe d'entraînement (7) peut être couplé au moyen du liaison de commutation (9) par le biais du second groupe d'entraînement (8) et de l'engrenage épicycloïdal (11) avec l'arbre de sortie (6).

2. Dispositif d'entraînement selon la revendication 1, **caractérisé en ce que** le groupe auxiliaire peut être couplé au moyen d'une liaison de commutation de groupe auxiliaire avec l'arbre de transmission auxiliaire (17).

3. Dispositif d'entraînement selon l'une quelconque des revendications précédentes, **caractérisé en ce que** l'engrenage épicycloïdal (11) présente un premier élément d'engrenage (13), un deuxième élément d'engrenage (14) et un troisième élément d'engrenage (15), dans lequel le premier élément d'engrenage (13) et le deuxième élément d'engrenage (14) sont couplés entre eux par le biais d'au moins une roue planétaire (16) logée de manière rotative au niveau du troisième élément d'engrenage (15), dans lequel le premier groupe d'entraînement (7) ainsi que le deuxième groupe d'entraînement (8) sont couplés avec le même et seulement le même des éléments d'engrenage (13, 14, 15) et l'arbre de transmission auxiliaire (17) est couplé avec un autre des éléments d'engrenage (13, 14, 15).

4. Dispositif d'entraînement selon l'une quelconque des revendications précédentes, **caractérisé en ce que** le deuxième groupe d'entraînement (8) est couplé avec le premier élément d'engrenage (13) réalisé comme roue creuse, l'arbre de transmission auxiliaire (17) est couplé avec le deuxième élément d'engrenage (14) réalisé comme roue solaire et/ou l'arbre de sortie (6) est couplé avec le troisième élément d'engrenage (15) réalisé comme support de roue planétaire.

5. Dispositif d'entraînement selon l'une quelconque des revendications précédentes, **caractérisé en ce qu'**au moins deux des éléments d'engrenage (13, 14, 15), en particulier la roue solaire et le support de roues planétaires peuvent être couplés entre eux au moyen d'une liaison de blocage (19).

6. Dispositif d'entraînement selon l'une quelconque des revendications précédentes, **caractérisé en ce qu'**au moins un des éléments d'engrenage (13, 14, 15) peut être freiné au moyen d'un frein.

7. Dispositif d'entraînement selon l'une quelconque des revendications précédentes, **caractérisé en ce que** le premier groupe d'entraînement (7) peut être couplé par le biais d'une autre liaison de commutation (20), en particulier en contournant l'engrenage épicycloïdal (11), avec une boîte de vitesses (21), dans lequel un arbre de sortie (22) de la boîte de vitesses (21) est couplé avec l'arbre de sortie (6) ou réalise l'arbre de sortie (6).

8. Dispositif d'entraînement selon la revendication 7, **caractérisé en ce qu'**un autre groupe d'entraînement (25) peut être couplé au moyen de l'autre liaison de commutation (20) avec le premier groupe d'entraînement (7), en particulier par le biais d'un autre engrenage épicycloïdal (24).

9. Dispositif d'entraînement selon l'une quelconque des revendications précédentes, **caractérisé en ce qu'**un autre groupe auxiliaire peut être couplé avec l'arbre de transmission auxiliaire (17), en particulier avec une transmission qui est différente d'une transmission se trouvant entre le groupe auxiliaire et l'arbre de transmission auxiliaire (17).
